# EUROPÄISCHE PATENTSCHRIFT

(11) **EP 2 326 850 B1**
(45) Veröffentlichungstag und Bekanntmachung des Hinweises auf die Patenterteilung: **04.07.2012**
(21) Anmeldenummer: 09755836.5
(22) Anmeldetag: 21.09.2009
(51) Int. Cl.: F16D 7/02

(54) **DREHBEWEGUNGSDÄMPFER**
ROTATIONAL MOVEMENT DAMPER
AMORTISSEUR DE MOUVEMENT ROTATIF

(30) Priorität: 22.09.2008 DE 102008048320
(43) Veröffentlichungstag der Anmeldung: 01.06.2011
(73) Patentinhaber: EJOT GmbH & Co. KG, 57334 Bad Laasphe (DE)
(72) Erfinder: KÜNKEL, Rolf, 57319 Bad Berleburg (DE); KORNSTEINER, Walter, A-6832 Muntlix (AT); LENHERR, Reinhold, CH-9422 Staad (CH); THOME, Axel, 73037 Göppingen (DE)
(74) Vertreter: Bardehle, Heinz
(86) Internationale Anmeldenummer: PCT/EP2009/006799
(87) Internationale Veröffentlichungsnummer: WO 2010/031583

(56) Entgegenhaltungen:
- DE-A1- 2 700 812
- DE-A1-102008 015 018
- FR-A- 1 365 805
- US-A- 2 429 561
- US-A- 2 606 431
- US-A- 2 977 779

## Beschreibung

Die Erfindung betrifft einen Drehbewegungsdämpfer mit einer Außenhülse und einer in die Außenhülse eingepassten Achse, die in der Außenhülse drehbar gelagert ist. Im Stand der Technik sind US-2429561, US-2977779, FR-1365805, US-2606431 and DE-2700812 relevant.

Drehbewegungsdämpfer werden häufig z.B. zusammen mit willkürlich bewegten Bauteilen verwendet, die bei ihrer Benutzung aus einer Ruhelage in eine Benutzungslage verschwenkt werden und aus dieser Benutzungslage zurückfedern, wenn der Benutzungsvorgang beendet ist. Dabei kann es sich um Abdeckungen von Handschuhfächern in einem Kraftfahrzeug oder Haltegriffe handeln, die das Aussteigen erleichtern und die beim Erfassen in eine Benutzungslage gebracht werden, aus der sie dann in ihre Ruhelage unter Federspannung zurückschwenken. Dieser Rückschwenkungsvorgang soll unter anderem wegen Vermeidung von harten Geräuschen verzögert erfolgen, also hinsichtlich seiner Drehbewegung gedämpft sein, wozu bereits Drehbewegungsdämpfer verwendet werden, die einerseits die Bewegung von der Ruhelage in die Arbeitslage mühelos ermöglichen und aus dieser Arbeitslage dann aber mit gedämpfter Bewegung zurückschwenken. Diese Bewegungsdämpfer arbeiten üblicherweise mit irgendeinem Fluid, das sich hinsichtlich seiner Strömung behindern lässt und damit den Effekt als Drehbewegungsdämpfer bewirkt.

Der Erfindung liegt die Aufgabe zugrunde, die Konstruktion solcher Drehbewegungsdämpfer besonders einfach und betriebssicher zu gestalten. Erfindungsgemäß geschieht dies dadurch, dass die Achse mit mindestens zwei scheibenförmigen Flanschen mit ebener Flanschfläche und mit gleichem Durchmesser aufweist, die in Ringkanäle in der Außenhülse so eingepasst sind, dass die Flansche mit ihren ebenen Flanschflächen unabhängig von Temperaturschwankungen mit jeweils gleicher flächiger Ausdehnung an den Gegenflächen der Ringkanäle anliegen und bei Verdrehung der Außenhülse und der Achse gegeneinander als Rutschkupplung wirken.

Diese Gestaltung kommt mit nur zwei miteinander verbundenen Bauteilen aus, nämlich der Außenhülse und der in dieser gelagerten Achse. Dabei sind die beiden Bestandteile des Bewegungsdämpfers, nämlich die Außenhülse und die Achse, so aneinander angepasst, dass bei Verdrehen der Teile gegeneinander eine mehr oder minder erhebliche Reibung zwischen den beiden Teilen zu überwinden ist. Dies ergibt für das gegenseitige Verdrehen der beiden Teile den Effekt einer Rutschkupplung, die in der Lage ist, bei Überschreiten eines bestimmten Drehmoments zu rutschen, also eine Verdrehung der beiden Teile gegeneinander ermöglicht. In Bezug auf das oben angegebene Anwendungsbeispiel, nämlich einen verdrehbaren Handgriff, lässt der erfindungsgemäße Drehbewegungsdämpfer folgende Bewegung des Handgriffs zu bzw. bewirkt dessen Bewegung in folgender Weise. Bei einem schnellen Aufklappen des Handgriffs gleiten die beiden Teile des Drehbewegungsdämpfers aneinander vorbei, d.h. die Rutschkupplung rutscht durch. Bei darauf erfolgendem Loslassen des Handgriffs, der üblicherweise gegen eine Feder verdrehbar angebracht ist und unter der Wirkung der Feder stets dahin tendiert, in die ursprüngliche Lage zurückzukehren, bewirkt die dieses Rückkehren des Bewegungsdämpfers verursachende Feder eine entsprechende Bewegung des Handgriffs, der sich aber der Drehbewegungsdämpfer entgegenstellt, indem der Drehbewegungsdämpfer aufgrund seiner Rutschkupplungswirkung die von der Federspannung bewirkten Rückkehrbewegung des Handgriffs mit seiner Reibung verzögert und, da die Federspannung diese Reibung überwindet, nur langsam in seine Ruhelage zurückkehrt, womit die gewünschte Bewegungsdämpfung eingetreten ist. Den gleichen Effekt des Bewegungsdämpfers kann man natürlich auch bei anderen Bauteilen anwenden, bei denen für eine Hin- und Herbewegung eine entsprechende Drehbewegung bezüglich des Drehbewegungsdämpfers mit erfolgt, so dass die Rückkehrbewegung unter der Wirkung der Reibung der Rutschkupplung entsprechend verzögert vor sich geht.

Die Rutschkupplungswirkung lässt sich dadurch in besonders einfacher Weise erzielen, dass von den beiden Bestandteilen des Bewegungsdämpfers (Außenhülse und Achse) mindestens ein Teil aus Kunststoff besteht, das durch Spritzguss an das andere Teil angepasst ist. Aufgrund dieser Gestaltung ergibt sich automatisch eine direkte Anpassung des angespritzten Teils an das andere Teil und damit auch bei Verdrehung der beiden Teile gegeneinander eine ausreichende Reibung, um entweder bei geringem Drehmoment eine Mitnahme zu bewirken oder bei größerem Drehmoment in ein Rutschen zu geraten, womit dann der Effekt der Rutschkupplung erzielt wird.

Der Effekt der Rutschkupplung wird dadurch besonders gefordert, dass die Kopfseite der Flansche abgerundet verläuft. In diesem Falle ergeben sich geringere Reibungsspannungsspitzen an irgendwelchen Ecken der Flansche gegenüber den Ringkanälen, so dass der Effekt der Reibung im Wesentlichen auf die ebenen Flanschflächen und die Gegenflächen der Ringkanäle konzentriert ist.

In den Figuren ist ein Ausführungsbeispiel der Erfindung dargestellt. Es zeigen:
- Figur 1: den Bewegungsdämpfer in der Zusammenstellung seiner beiden Teile, nämlich Außenhülse und Achse.
- Figur 2: den Bewegungsdämpfer gemäß Figur 1 in perspektivischer Sicht;
- Figur 3: eine Draufsicht auf den Bewegungsdämpfer gemäß Figur 1 von der Seite der Außenhülse her;
- Figur 4: einen Schnitt entlang der Linie IV-IV aus Figur 3 mit im Querschnitt rechteckig gestalteten Flanschen;
- Figur 5: eine Abwandlung der Gestaltung gemäß Figur 4 mit an der Kopfseite abgerundeten Flanschen;
- Figur 6: die Außenhülse allein;
- Figur 7: die in Figur 6 dargestellte Außenhülse in perspektivischer Sicht;
- Figur 8: eine Draufsicht auf die Außenhülse gemäß Figur 6 von der offenen Seite der Zähne des Zahnrades gemäß Figur 6 her gesehen;
- Figur 9: einen Schnitt durch die Außenhülse gemäß Figur 8 entlang der Linie IX-IX;
- Figur 10: einen Schnitt ähnlich dem gemäß Figur 9 mit abgerundeter Kopfseite der Flansche;
- Figur 11: die Achse in perspektivischer Sicht;
- Figur 12: die Achse gemäß Figur 11 in Seitensicht mit im Querschnitt rechteckigen Flanschen;
- Figur 13: eine Abwandlung der Achse gemäß Figur 12 mit Flanschen mit abgerundeter Kopfseite.

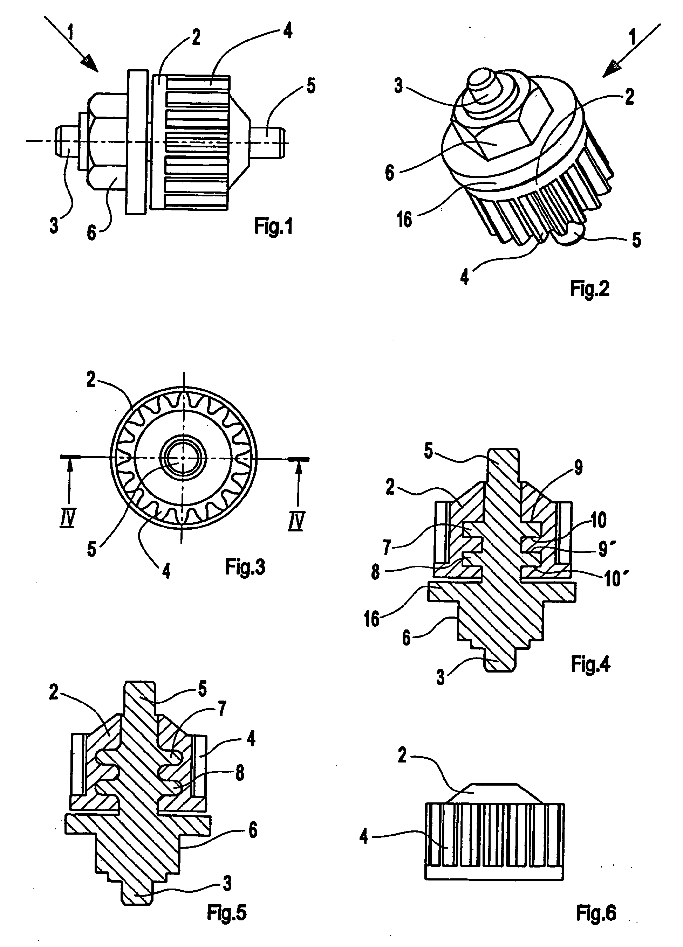

Der in der Figur 1 dargestellte Bewegungsdämpfer 1 besteht aus der Außenhülse 2 und der Achse 3. Die Außenhülse 2 ist mit der Verzahnung 4 versehen, über die der Bewegungsdämpfer 1 in Drehung versetzt werden kann. In die Außenhülse 2 ist die Achse 3 eingeführt, die mit ihrem Achsstummel 5 aus der Außenhülse 2 heraus ragt. Die Achse 3 ist mit dem Sechskant 6 versehen, der dazu dient, in ein weiteres Bauteil (nicht dargestellt) einzugreifen und dieses anzutreiben

Die Zusammenstellung von Außenhülse 2 und Achse 3 mit dem Sechskant 4 geht deutlicher aus der Figur 4 hervor, auf die weiter unten näher eingegangen wird

In der Figur 2 ist der in Figur 1 dargestellte Bewegungsdampfer in perspektivischer Sicht dargestellt

Figur 3 zeigt eine Draufsicht auf den Bewegungsdämpfer 1 mit Blick auf die offene Seite der Verzahnung 4.

Figur 4 zeigt die Zusammenstellung des Bewegungsdämpfers im Schnitt gemäß der Linie IV-IV aus Figur 3. Figur 4 verdeutlicht die aneinander angepasste Gestaltung von Außenhülse 2 und Achse 3. Die Achse 3 durchdringt die Außenhülse 2 vollständig und greift gewissermaßen mit ihren beiden Flanschen 7 und 8 in das Material der Außenhülse ein, wobei, wie ersichtlich, die Außenhülse 2 sich satt um die Achse 3 mit ihren beiden Flanschen 7 und 8 schließt. Die beiden Flansche 7 und 8 sind scheibenförmig mit jeweils ebener Flanschfläche ausgebildet. Es sei noch darauf hingewiesen, dass natürlich auch weitere derartige Flansche vorgesehen werden können, die dann in einer entsprechend verlängerten Außenhülse unterzubringen sind.

Wie aus Figur 4 ersichtlich, umschließt das Material der Außenhülse 2 satt die Kontur der Achse 3 mit ihren beiden Flanschen 7 und 8. Diese innige Verbindung lässt sich am Einfachsten dadurch herstellen, dass die Außenhülse 2 durch Spritzgießen um die Achse 3 mit ihren beiden Flanschen 7 und 8 geformt wird. Dabei ergibt sich ein sattes Aneinanderliegen der beiden Teile, nämlich der Außenhülse 2 an der Achse 3, und damit bei Verdrehen der Achse 3 gegenüber der Außenhülse 2 eine entsprechende Reibung, vor allem im Bereich der Flansche 7 und 8, was auch gewollt ist. Bei dem hier gewählten Ausführungsbeispiel besteht die Außenhülse 2 aus Kunststoff, die in einer Spritzform um die Achse 4 herum gespritzt ist und sich dabei automatisch satt an die Konturen der Achse 3 anlegt.

Aufgrund der Gestaltung der Flansche 7 und 8 mit ihren ebenen Flanschflächen 9/10 und 9'/10' mit gleichem Durchmesser der Flansche 7 und 8 ergibt sich zwischen den beiden Flanschen 7 und 8 bei Abkühlung der Außenhülse 2 ein Zusammenziehen des Materials der Außenhülse 2 und damit ein Druck auf die nach außen weisenden ebenen Flanschflächen 9 und 10' der Flansche 7 und 8 bei gleichzeitiger Zusammenziehung der aufeinander zugewandten ebenen Innenflächen 10 und 9' der beiden Flansche 7 und 8, womit sich diese Effekte gegenseitig kompensieren und praktisch keine Reibungsänderung zwischen Außenhülse 2 und Achse 3 entsteht. Wenn dagegen infolge Temperaturerhöhung sich das Material der Außenhülse 2 ausdehnt, so entsteht zwischen den beiden Flanschen 7 und 8 ein entsprechender Druck auf die inneren Flanschflächen 9' und 10 der Flansche 7 und 8. Da diese aber auf Seiten ihrer äußeren Flanschflächen 9 und 10' wegen der unbehinderten Ausdehnung des Materials der Außenhülse 2 sich nur gering auswirken, bleibt vorwiegend die Ausdehnung in dem Zwischenraum zwischen den beiden Flanschen 7 und 8, so dass auch in diesem Falle die Höhe der gesamten Reibungskräfte nahezu konstant bleiben. Auf jeden Fall hat sich durch die Praxis erwiesen, dass aufgrund der dargestellten Gestaltung der Achse 3 mit den beiden Flanschen 7 und 8 eine sich auf den Kunststoff der Außenhülse 2 auswirkende Temperaturänderung hinsichtlich der Rutschkupplungswirkung praktisch nicht auswirkt.

In der Figur 5 ist ebenfalls ein Schnitt durch den Bewegungsdämpfer dargestellt, ähnlich denjenigen gemäß Figur 4, wobei allerdings die Kopfseiten der Flansche 7 und 8 abgerundet sind, was besondere Druckspitzen an irgendwelchen Ecken der Flansche 7 und 8 vermeidet.

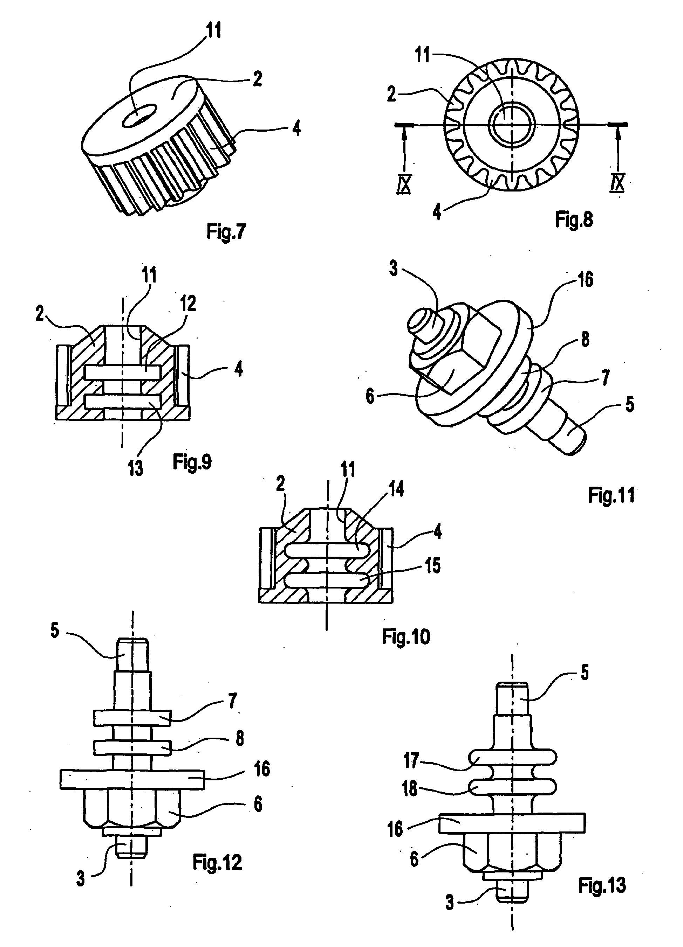

In der Figur 6 ist die Außenhülse 2 für sich allein dargestellt, die die Verzahnung 4 aufweist. In Figur 7 ist die gleiche Außenhülse in perspektivischer Sicht wiedergegeben. Figur 7 zeigt noch den runden Durchbruch 11, durch den bei Zusammenstellung die Achse 3 hindurch ragt.

Figur 8 zeigt eine Draufsicht auf die Außenhülse gemäß Figur 7 von der Seite der offenen Flanken der Verzahnung 4 gesehen.

Figur 9 zeigt einen Schnitt durch die Außenhülse 2 entlang der Linie IX-IX aus Figur 8 mit den Ringkanälen 12 und 13, die bei eingebrachter Achse 2 die Flansche 7 und 8 aufnehmen.

Figur 10 zeigt eine Abwandlung der Darstellung gemäß Figur 9, bei der die Ringkanäle 14 und 15 außen abgerundet verlaufen, um entsprechend abgerundete Flansche aufnehmen zu können.

In Figur 11 ist die Achse 3 dargestellt, die auf ihrer einen Seite den Sechskant 6 aufweist und auf ihrer anderen Seite in dem Achsstummel 5 endet. Weiterhin trägt die Achse 3 die beiden Flansche 7 und 8. Figur 11 zeigt außerdem noch den Ringflansch 16 (siehe auch Figuren 2 und 4), der eine Art Begrenzung zwischen den Bereichen der Achse 3 bildet, nämlich zwischen dem Bereich mit dem Sechskant 6 und dem Bereich mit den Flanschen 7 und 8.

In den beiden Figuren 12 und 13 ist die Achse 3 in Seitensicht dargestellt, wobei es sich bei der Figur 12 um eine Achse mit rechteckig geformten Flanschen 7 und 8 handelt, während bei Figur 13 die Flansche 17 und 18 abgerundet enden.

## Patentansprüche

1. Drehbewegungsdämpfer (1) mit einer Außenhülse (2) und einer in die Außenhülse (2) eingepassten Achse (3), die in der Außenhülse (2) drehbar gelagert ist, wobei die Achse (3) mindestens zwei scheibenförmige Flanschen (7, 8; 17, 18) mit ebener Flanschfläche (9, 10; 9', 10') mit gleichem Durchmesser aufweist, die in Ringkanäle (12,13; 14, 15) in der Außenhülse (2) so eingepasst sind, dass die Flansche (7, 8; 17, 18) mit ihren ebenen Flanschflächen (9, 10; 9', 10') unabhängig von Temperaturschwankungen mit jeweils gleicher flächiger Ausdehnung an den Gegenflächen der Ringkanäle (12, 13; 14, 15) anliegen und bei Verdrehung der Außenhülse (2) und der Achse (3) gegeneinander als Rutschkupplung wirken, **dadurch gekennzeichnet, dass** von den beiden Bestandteilen des Bewegungsdämpfers Außenhülse (2) und Achse (3) mindestens ein Teil aus Kunststoff besteht, das durch Spritzguss an das andere Teil angepasst ist.

2. Drehbewegungsdämpfer nach Anspruch 1, **dadurch gekennzeichnet, dass** die Kopfseite der Flansche (17, 18) abgerundet verläuft.

## Claims

1. Rotational movement damper (1) having an outer sleeve (2) and an axle (3) which fits into the outer sleeve (2) and is mounted to rotate in the outer sleeve (2), wherein the axle (3) comprises at least two discoidal flanges (7, 8; 17, 18) with flat flange surfaces (9,10; 9', 10') and the same diameter fitting in annular channels (12, 13; 14, 15) in the outer sleeve (2) such that the flanges (7, 8; 17, 18) contact with the flat flange surfaces (9, 10; 9', 10') thereof against the equally planar area on the counter surfaces of the annular channels (12, 13; 14, 15) unaffected by temperature variations and, on counter-rotation of the outer sleeve (2) and the axle (3) act as a slipper clutch, **characterized in that** of the two constituents of the movement damper outer sleeve (2) and axle (3), at least one part consists out of plastics which is adapted to the other part by injection molding.

2. Rotational movement damper according to claim 1, **characterized in that** the head surface of the flanges (17, 18) is arranged rounded.

## Revendications

1. Amortisseur de mouvement rotatif (1) avec un manchon externe (2) et un axe (3) emboîté dans le manchon externe (2) qui est placé dans le manchon externe (2) de manière rotative, sachant que l'axe présente au moins deux brides en forme de rondelle (7, 8 ; 17, 18) avec une face de bride lisse (9, 10, 9', 10') avec le même diamètre qui sont emboîtées dans les canaux annulaires (12, 13 ; 14, 15) du manchon externe (2) de telle manière que les brides (7, 8 ; 17, 18) avec leurs surfaces de bride lisses (9, 10 ; 9', 10'), indépendamment des fluctuations de température, avec respectivement la même extension plane sont contiguës aux surfaces antagonistes des canaux annulaires (12, 13 ; 14, 15) et agissent en tant qu'accouplement à friction lors de la torsion du manchon externe (2) et de l'axe (3) l'un contre l'autre, **caractérisé en ce que**, des deux éléments de l'amortisseur de mouvement rotatif (1), manchon externe (2) et axe (3) au moins une pièce est composée de plastique qui est adapté à l'autre pièce par moulage par injection.

2. Amortisseur de mouvement rotatif (1), **caractérisé en ce que** le bout des brides (17, 18) s'étend de manière arrondie.
